# EUROPÄISCHE PATENTANMELDUNG

(11) **EP 1 093 988 A1**
(43) Veröffentlichungstag der Anmeldung: **25.04.2001**
(21) Anmeldenummer: 00810977.9
(22) Anmeldetag: 23.10.2000
(51) Int. Cl.: B62B 5/00

(54) **Transportwagen**

(30) Priorität: 22.10.1999 CH 193999
(71) Anmelder: Karl Bösch-Engineering, 4202 Duggingen (CH)
(72) Erfinder: Die Erfindernennung liegt noch nicht vor
(74) Vertreter: Eder, Carl E.

(57) **Zusammenfassung**

Der Transportwagen (1) dient zum Transportieren von Transportgut wie Einkäufen in einem Supermarkt. Er besitzt ein Fahrgestell (2) und einen lösbar an diesem befestigten Behälter (3). Der Aufsatz kann mit einem Senkmechanismus auf eine Ablagefläche, beispielsweise im Heck eines Kraftfahrzeuges, abgesenkt und anschliessend vom Fahrgestell (2) gelöst werden. Dadurch muss der Transportwagen (1) für die Beförderung des Transportgutes in einem Kraftfahrzeug nicht geleert werden. Am Bestimmungsort kann beispielsweise ein weiteres Fahrgestell (2) bereitgestellt sein, an dem der Behälter (3) befestigt werden kann und mit dem er weitertransportiert werden kann.

## Beschreibung

Die Erfindung betrifft einen Transportwagen, bestehend aus einem Fahrgestell mit Rädern und einem relativ zum Fahrgestell von einer Beladestellung mit einem Senkmechanismus nach unten bewegbaren Behälter zum Aufnehmen von Transportgut, zum Beispiel von Einkäufen in Supermärkten.

Üblicherweise in Supermärkten den Kunden zur Verfügung gestellte Transportwagen weisen ein Fahrgestell und einen fest an diesem befestigten und beispielsweise als Gitterkorb ausgebildeten Behälter auf. Zusätzlich besitzen solche Transportwagen häufig noch einen Kindersitz. Weiter ist meist die eine Stirnwand des Gitterkorbes, nämlich die Rückwand, so mit den übrigen Teilen des Gitterkorbes verbunden, dass sie weggeklappt werden kann und so das Einschieben des Gitterkorbes eines weiteren Transportwagens in den Gitterkorb ermöglicht. Auf diese Weise sind die Transportwagen stapelbar.

Transportwagen dieser Art weisen den Nachteil auf, dass sie nur im Supermarkt und dessen nächster Umgebung benutzt werden können. Wenn die eingekauften Waren mit einem Kraftfahrzeug weiter transportiert werden sollen, müssen sie aus diesem Grund am Einkaufsort in das Fahrzeug umgeladen und aus diesem am Bestimmungsort wieder ausgeladen werden.

Aus der DE-A-196 11 543 ist ein Transportwagen bekannt, dessen Behälter auf die Abstellfläche eines Kraftfahrzeuges geschoben werden und anschliessend sein Fahrgestell relativ zum Behälter so verschwenkt werden kann, dass es über dem Behälter liegt. Der Wagen kann somit beispielsweise mitsamt seiner Ladung weiter transportiert werden.

Eine solche Lösung hat den Nachteil, dass das Fahrgestell auf der Abstellfläche des Kraftfahrzeuges relativ viel Platz beansprucht. Auch ist ein Wagen mit Fahrgestell relativ teuer und deshalb für ein Pfandsystem, in dem der Supermarkt den Wagen besitzt und dem Kunden gegen Pfand zur Verfügung stellt, eher ungeeignet.

Der Erfindung liegt nun die Aufgabe zu Grunde, einen Transportwagen zur Verwendung in Supermärkten zur Verfügung zu stellen, der die Nachteile bestehender Transportwagen nicht aufweist. Diese Aufgabe wird gelöst durch einen Transportwagen mit den Merkmalen des Anspruchs 1.

Vorteilhafte Ausgestaltungen gehen aus den abhängigen Ansprüchen hervor.

Der Behälter des erfindungsgemässen Transportwagens lässt sich auf eine einfache Weise, ohne Kraftaufwand für den Benutzer, auf die Ladefläche eines Kraftfahrzeuges absenken und anschliessend vom Fahrgestell lösen. Dadurch kann der Behälter mit Inhalt im Kraftfahrzeug weiter transportiert werden und es entfällt der Zeitaufwand für das Entladen des Transportwagens in das Fahrzeug. Dass der Behälter ohne Fahrgestell weiter transportiert werden kann, erlaubt beispielsweise, dass Supermärkte ein Pfandsystem einrichten. Dem Benutzer wird gegen Pfand jeweils ein Behälter zur Verfügung gestellt. Der Benutzer kann dann diesen für den Warentransport nach Hause nutzen. So müssen Einkäufe in einem mit Kraftfahrzeugen erreichbaren Supermarkt nicht mehrmals umgeladen werden. Es kann beispielsweise noch vorgesehen sein, dass in Wohnsiedlungen Fahrgestelle vorhanden sind, mit denen der Behälter vom Kraftfahrzeug weg in die Wohnung des Benutzers transportiert werden kann und ein möglicherweise schwerer Einkauf nur noch dort entladen werden muss.

Im Folgenden werden Ausführungsbeispiele der Erfindung anhand einer stark schematischen Zeichnung noch etwas detaillierter beschrieben. In der Zeichnung zeigt
die Figur 1 eine Ansicht eines erfindungsgemässen Transportwagens,
die Figur 2 eine Seitenansicht einer zweiten Ausführungsform des erfindungsgemässen Transportwagens in einem im Vergleich zur Figur 1 verkleinerten Massstab, und
die Figur 3 die Seitenansicht der Figur 2, wobei der Behälter auf die Abstellfläche eines Kraftfahrzeuges abgesenkt ist.

Der Transportwagen 1 weist ein Fahrgestell 2 und einen Behälter 3 auf. Er besitzt eine durch einen Pfeil angedeutete Schieberichtung 4. Diese Schieberichtung 4 definiert auch eine Transportwagen-Vorder- und eine -Hinterseite, wobei die Vorderseite die im Bezug auf diese Schieberichtung 4 vorne liegende Seite ist.

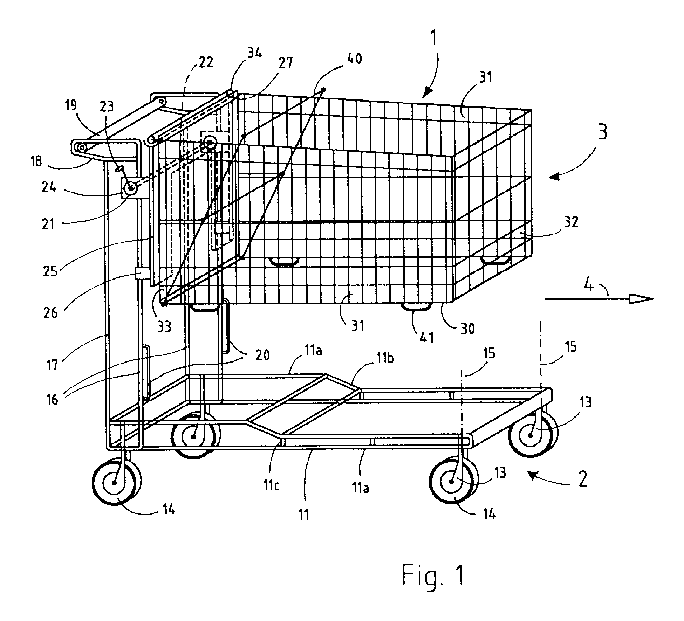

Das Fahrgestell besitzt eine Basis 11, die aus Längsstützen 11a, Querstreben 11b, und Zwischenstücken 11c aufgebaut sein kann. Die Längsstützen 11a können eventuell, wie das in der Zeichnung dargestellt ist, sowohl im Wesentlichen horizontale als auch geneigte Abschnitte aufweisen. Die Verteilung dieser Abschnitte ist dann mit Vorteil so, dass verschiedene Fahrgestelle derselben Bauart optimal ineinander geschoben und also gestapelt werden können. Von der Basis 11 über Radhalter 13 getragen sind mindestens drei und vorzugsweise vier Räder 14. Die Radhalter 13 des vorderen Rades bzw. der vorderen Räder oder die Radhalter 13 der hinteren Räder können dabei zusätzlich um eine Achse 15 verschwenkbar sein, was das Steuern des Wagens erleichtert. Weiter besitzt das Fahrgestell vordere und hintere seitliche Tragholme 16 bzw. 17 sowie an diesen befestigte Rohrschleifen 18. Zwischen den Rohrschleifen 18 erstreckt sich ein Lenkholm 19, mit dem der Transportwagen 1 gestossen werden kann. Weiter weist das Fahrgestell einen an den vorderen Tragholmen 16 angebrachten gepolsterte Stoss-Schutz 20 auf. Die vorderen Tragholme 16 sind im oberen Bereich zusätzlich noch beispielsweise mit einer nicht gezeichneten Zahnung versehen. In diese kann die Zahnung von nur schematisch dargestellten, mit Lagern gelagerten Zahnrädern 21 eingreifen, die über eine Welle 22 miteinander verbunden sind. Eines der Zahnräder kann über eine fest angebrachte Kurbel 23 verfügen. Über Verbindungselemente 24 mit den Lagern der Zahnräder 21 verbunden ist eine Platte 25, die ihrerseits eine Aussparung für die Benutzung des nachfolgend noch näher bezeichneten Kindersitzes aufweist. Die Platte 25 verfügt noch über Gleiter 26, auf einem mittleren Abschnitt der vorderen Tragholme 16 gleiten können und die Platte 25 zusammen mit den Verbindungselementen 24 gegen Verschwenkungen sichern. Die Zahnung der Tragholme 16, die Zahnräder 21 und ihre Lager sowie die Verbindungselemente 24 und die Gleiter 26 bilden zusammen einen Senk- und Hubmechanismus für eine lineare, vertikale Verschiebung der Platte 25. Das Fahrgestell 2 verfügt noch über nicht gezeichnete Rastmittel von an sich bekannter Art, die die Platte 25 in ihrer obersten, in der Figur 1 gezeichneten Stellung lösbar fixieren können. Zusätzlich ist vorzugsweise noch eine Hubdämpfung vorhanden, wie sie beispielsweise von Personenkraftfahrzeug-Hecktüren her bekannt ist. Die Platte 25 ist an ihrer Oberkante noch mit einer Tragrinne 27 versehen, die die Form eines an der Platte 25 befestigten, nach oben offenen Hohlzylindersektors hat.

Der Behälter 3 ist beispielsweise als im Grundriss trapezförmiger Behälter mit einem Boden 30, zwei Seitenwänden 31, einer Vorderwand 32 und einer Rückwand 33 ausgebildet. Die Seitenwände 31, die Vorderwand 32 und die Rückwand 33 sowie beispielsweise auch der Boden 30 sind als in der Zeichnung nur teilweise schematisch angedeutete Gitter von Metallstäben ausgebildet, die jeweils einen Rahmen aufweisen. An den Rahmen 31a der Seitenwände 31 fixiert ist eine Fixierstange 34, die im gezeichneten, zusammengesetzten Zustand des Transportfahrzeugs 1 von der Tragrinne 27 teilweise umfasst ist bzw. in diese eingesetzt ist. An der Rückwand 33 sind noch Anschläge 35 angebracht, die durch das Gewicht des Behälters 3 und eventuell seines Inhalts gegen die Platte 25 gedrückt werden. Dem dabei entstehenden Drehmoment auf den Behälter 3, wirkt eine von der Tragrinne 27 auf die Fixierstange 34 ausgeübte Kraft entgegen, so dass die Tragrinne 27 zusammen mit der Platte 25 die Fixier- oder Befestigungsmittel für den Behälter 3 am Fahrgestell 2 bildet.

Der Behälter 3 weist beispielsweise noch einen in der Zeichnung nur angedeuteten Kindersitz 40 auf. Zusätzlich besitzt er vier am Boden angebrachte Gleitkufen 41. Mit diesen Gleitkufen kann der Behälter 3 auf der Abstellfläche des Kraftfahrzeuges in Fahrtrichtung verschoben werden, wenn er vom Fahrgestell 2 gelöst ist.

Wenn der Transportwagen zum Einkaufen in einem Supermarkt verwendet wird, ist seine Platte 25 in der gezeichneten, obersten Stellung und damit der Transportwagen in der Beladestellung. Nach einem getätigten Einkauf kann der mit Transportgut gefüllte Behälter 3 als Ganzes in den Laderaum eines Kraftfahrzeuges hineingeschoben werden. Das geschieht so, dass sich die Basis 11 des Transportwagens 1 unter den als Kofferraum-Abstellfläche ausgebildeten Teil des Fahrgestells eines beispielsweise mit einer Hecktüre versehenen Personenkraftfahrzeuges geschoben wird, bis der Stoss-Schutz 20 an der Stossstange des Fahrzeuges ansteht. Der Behälter 3 befindet sich dann über der Abstellfläche und kann durch Lösen der Rastmittel und Drehen der Kurbel 23 auf diese abgesenkt werden. Nachdem der Behälter 3 auf der Abstellfläche aufliegt, wird die Platte 25 noch etwas weiter abgesenkt, so dass die Tragrinne 27 die Fixierstange nicht mehr umgreift. Das Fahrgestell 2 kann dann vom Kraftfahrzeug weggefahren und beispielsweise wieder in den Supermarkt gebracht werden, während der beladene Behälter als Behälter für den Weitertransport der Transportguts dient. Vorzugsweise werden dann in Wohnsiedlungen, Tiefgaragen oder dergleichen weitere Fahrgestelle zur Verfügung gestellt, mit denen der Behälter beispielsweise bis in eine Wohnung weiter transportiert werden kann. Zum erneuten Befestigen des Behälters 3 am Fahrgestell wird das Fahrgestell so an den Behälter geschoben, dass die Tragrinne 27 unter der Fixierstange 34 liegt. Anschliessend wird die Platte 25 angehoben, wobei die Zahnräder 21 und Zahnung der vorderen Tragholme 16 so ausgestaltet und untersetzt sind, dass das Anheben auch eines beladenen Behälters 3 durch Betätigen der Kurbel 23 relativ mühelos geschehen kann.

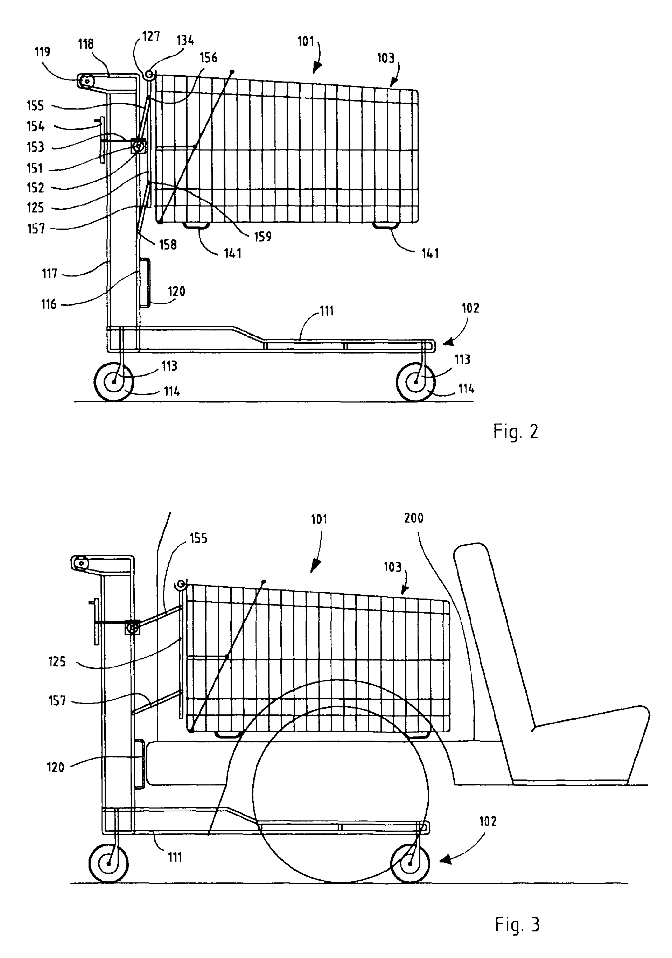

Der in den Figuren 2 und 3 dargestellte Transportwagen 101 weist einen im Wesentlichen mit dem Behälter 3 identischen Behälter 103 auf, der im Folgenden nicht noch einmal beschrieben wird. Das Fahrgestell 102 besitzt eine Basis 111, Radhalter 113, Räder 114 Tragholme 116, 117, Rohrschleifen 118, Lenkholm 119 und Stoss-Schutz 120 der vorstehend beschriebenen Art. An den vorderen Tragholmen 116 sind Lager 150 befestigt, mit denen ein um seine horizontale Achse drehbarer Schwenkstab 151 gelagert ist. Auf der einen Seite weist der Schwenkstab 151 noch ein Schneckenrad 152 auf, das in die Windungen einer Schnecke 153 eingreift, die mit einer gegen die Hinterseite des Transportwagens ragenden Kurbel 154 verbunden ist. Fest am Schwenkstab 151 angebracht sind zwei Lenker 155, die mittels Scharniere 156 mit einer Platte 125 schwenkbar verbunden sind. Zwei weitere Lenker 157 sind parallel zu den Lenkern 155 angebracht und mittels Scharnieren 158, 159 mit den vorderen Tragholmen 116 und der Platte 125 schwenkbar verbunden. Wenn der Stoss-Schutz 120 des beladenen Transportwagens 101 am Heck eines Kraftfahrzeuges anstösst, kann der Behälter 103 durch Drehen der Kurbel 154 von der Beladestellung weg auf die Abstellfläche 200 des Kraftfahrzeuges abgesenkt werden. Auf diese Weise bilden die Lenker 155, 157 zusammen mit der Kurbel 154, der Schneckenradstange 153, dem Schwenkstab 151 und den Scharnieren einen Senk- und Hubmechanismus für den Beälter 103. Das Heck des Kraftfahrzeuges sowie der auf die Abstellfläche 200 abgesenkte Behälter 103 sind in der Figur 3 schematisch dargestellt. Weil Fahrgestell 102 und Behälter 103 durch zwei Paare zueinander paralleler Lenker 155, 157 verbunden sind, behält der Behälter 103 bei der Absenkbewegung seine Orientierung bei, das heisst er befindet sich an jedem Punkt in einer Lage, die parallel zu seiner ursprünglichen Lage ist. Beim Verschwenken der Lenker 155, 157 bewegt sich der Behälter 103 gleichzeitig nach unten und nach vorne, wodurch er im Innern des Kofferraums des Fahrzeugs zu liegen kommt und nicht noch weiter hineingeschoben werden muss, was bei mit schweren Gütern beladenen Aufsätzen von Vorteil sein kann. Die durch das Schneckenrad 152 und die Schneckenradstange 153 gebildete Untersetzung kann darüber hinaus so gewählt werden, dass die Hub-Drehbewegung selbsthemmend ist.

Es sei hier noch erwähnt, dass die vorstehend beschriebenen zwei Ausführungsbeispiele keineswegs die einzig möglichen Ausführungsformen der Erfindung sind und dass noch vielfältige weitere Ausgestaltungen denkbar sind. So muss Form des Fahrgestells keinesfalls so sein wie die gezeichnete und beschriebene. Insbesondere müssen die Tragholme 16, 17, 116, 117 keinesfalls als vertikale Stangen ausgebildet sein, sondern sie können beispielsweise ebensogut geneigt und/oder geknickt sein, wie das teilweise auch von bestehenden Transportwagen her bekannt ist. Die Rückwand 33 des Behälters ist dann ebenfalls entsprechend nicht vertikal. Weiter kann der Behälter beispielsweise Griffe oder dergleichen aufweisen, mit denen er über kurze Strecken von Hand getragen werden kann. Dies wird insbesondere dann sinnvoll sein, wenn der Behälter eher klein ist. Anstelle von Gleitkufen können ebensogut Gleitrollen vorhanden sein. Es ist übrigens auch keinesfalls notwendig, dass der Senk- und/oder Hubmechanismus wie vorstehend beschrieben ausgeführt ist. Es sei in diesem Zusammenhang auf die vielen zum Stand der Technik gehörenden Möglichkeiten verwiesen, gemäss denen ein Senk- oder Hubmechanismus ausgestaltet werden kann und die einer Fachperson hinlänglich bekannt sind.

## Patentansprüche

1. Transportwagen, bestehend aus einem Fahrgestell (2, 102) mit Rädern (14, 114), und einem relativ zum Fahrgestell (2, 102) von einer Beladestellung weg mit einem Senkmechanismus nach unten bewegbaren Behälter (3, 103) zum Aufnehmen von Transportgut, dadurch gekennzeichnet, dass der Behälter (3, 103) lösbar am Fahrgestell (2, 102) befestigt ist.

2. Transportwagen nach Anspruch 1, dadurch gekennzeichnet, dass das Fahrgestell (2, 102) ein Gerüst aus Metallprofilen sowie vier Räder (14, 114) aufweist, und dass der Behälter (3, 103) einen Boden (30), zwei Seitenwände (31), eine Vorderwand (32) und eine Hinterwand (33) besitzt, wobei mindestens die Seitenwände (31), die Vorderwand (32) und die Hinterwand (33) vorzugsweise aus je einem Gitter von Metallstäben bestehen.

3. Transportwagen nach Anspruch 1 oder 2, dadurch gekennzeichnet, dass das Fahrgestell (2, 102) einen Senkmechanismus aufweist, der gleichzeitig auch als Hubmechanismus dient, sowie mit dem Senk- und Hubmechanismus verbundene Befestigungsmittel (25, 27, 125, 127) besitzt, und dass der Behälter (3, 103) mit den Befestigungsmitteln (25, 27, 125, 127) lösbar verbunden ist.

4. Transportwagen nach Anspruch 3, dadurch gekennzeichnet, dass die Befestigungsmittel eine hohlzylindersektorförmigen Tragrinne (27, 127) aufweisen, die eine fest mit dem Behälter (3, 103) verbundene Fixierstange (34, 134) so teilweise umgreift, dass dadurch die lösbare Verbindung des Behälters (3, 103) mit dem Fahrgestell (2, 102) gebildet wird.

5. Transportwagen nach einem der Ansprüche 1 bis 4, dadurch gekennzeichnet, dass der Behälter (3) relativ zum Fahrgestell (2) linear von der Beladestellung weg nach unten verschiebbar ist.

6. Transportwagen nach einem der Ansprüche 1 bis 4, dadurch gekennzeichnet, dass verschwenkbare Lenker (155, 157) vorhanden sind, mit denen der Behälter (103) so am Fahrgestell (102) befestigt ist, dass er unter Beibehaltung seiner Orientierung eine Bewegung von der Beladestellung weg ausführen kann, und dass diese Bewegung sowohl eine vertikale Komponente in Richtung nach unten, als auch eine horizontale Komponente besitzt.

7. Transportwagen nach Anspruch 6, gekennzeichnet durch ein Untersetzungsgetriebe, das so gewählt ist, dass die Hub-Drehbewegung selbsthemmend ist.

8. Transportwagen nach einem der Ansprüche 1 bis 7, dadurch gekennzeichnet, dass der Behälter (3, 103) mit Gleitkufen (41, 141) oder Gleitrollen versehen ist.

9. Transportwagen nach einem der Ansprüche 1 bis 8, dadurch gekennzeichnet, dass er mit Rastmitteln zur Fixierung des Behälters (3, 103) in der Beladestellung sowie Hubdämpfungsmitteln versehen ist, mit denen die Absenkbewegung des Behälters (3, 103) von der Beladestellung weg gedämpft werden kann.

10. Transportwagen nach einem der Ansprüche 1 bis 9, dadurch gekennzeichnet, dass sein Fahrgestell so ausgestaltet ist, dass es zusammen mit anderen Fahrgestellen derselben Bauart stapelbar ist.
